# EUROPEAN PATENT SPECIFICATION

(11) **EP 2 914 029 B1**
(45) Date of publication and mention of the grant of the patent: **25.07.2018**
(21) Application number: 13849485.1
(22) Date of filing: 16.09.2013
(51) Int. Cl.: H04L 5/00, H04W 76/15, H04W 28/16

(54) **METHOD AND DEVICE FOR MANAGEMENT OF SECONDARY CELLS IN CARRIER AGGREGATION**
VERFAHREN UND VORRICHTUNG ZUR VERWALTUNG VON SEKUNDÄRZELLEN IN EINER TRÄGERAGGREGATION
PROCÉDÉ ET DISPOSITIF DE GESTION DE CELLULES SECONDAIRES EN AGRÉGATION DE PORTEUSES

(30) Priority: 26.10.2012 CN 201210416995
(43) Date of publication of application: 02.09.2015
(73) Proprietor: ZTE Corporation, Shenzhen, Guangdong 518057 (CN)
(72) Inventor: LI, Jinglan, Shenzhen Guangdong 518057 (CN)
(74) Representative: Gevers Patents
(86) International application number: PCT/CN2013/083588
(87) International publication number: WO 2014/063542

(56) References cited:
- CN-A- 102 387 508
- CN-A- 102 440 051
- CN-A- 102 938 902
- US-A1- 2011 281 578
- XUENA CAO ET AL: "Handover performance of relaxing SCell measurement period in LTE-A with carrier aggregation", ELECTRIC INFORMATION AND CONTROL ENGINEERING (ICEICE), 2011 INTERNATIONAL CONFERENCE ON, IEEE, 15 April 2011 (2011-04-15), pages 438-441, XP031874333, DOI: 10.1109/ICEICE.2011.5777348 ISBN: 978-1-4244-8036-4
- NTT DOCOMO: "Test case proposals for CA measurements when SCell is deactivated", 3GPP DRAFT; R4-113540, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Roma; 20110627, 22 June 2011 (2011-06-22), XP050542703, [retrieved on 2011-06-22]
- ZTE: "Analysis on Carrier Aggregation (CA) Measurements of SCell", 3GPP DRAFT; R4-103553, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Xian; 20101011, 7 October 2010 (2010-10-07), XP050455250, [retrieved on 2010-10-07]

## Description

### TECHNICAL FIELD

The disclosure relates to a technical field of a Long Term Evolution (LTE) system, and in particularly to a method and a device for managing a Secondary Cell (SCell) in Carrier Aggregation (CA).

### BACKGROUND

In order to meet a requirement for a peak rate, a Long Term Evolution-Advanced (LTE-A) system currently supports a maximum 100MHz bandwidth, however such a large bandwidth can hardly be found in an existing available frequency spectrum resource, and the large bandwidth brings a difficulty to hardware design of a base station and a terminal. In addition, with regard to the frequency spectrum resource dispersed in several frequency bands, there is an urgent requirement for a technique which can sufficiently use the frequency spectrum resource. Based on the above consideration, the LTE-A system introduces a key technique, namely CA.

The CA is a function introduced in 3rd Generation Partnership Project-ReleaselO (3GPP R10), which can meet a requirement of the LTE-A system for a larger bandwidth and is a necessary technique for keeping backward compatibility with the LTE system. Currently, a maximum bandwidth supported by the LTE system is 20MHz, the LTE-A system can support a maximum 100MHz bandwidth by aggregating multiple carriers which is backward compatible with the LTE system. The CA is referred to aggregating two or more Component Carriers (CCs) together by the base station, of which a maximum number is five, to provide a service together for a User Equipment (UE), and a maximum frequency of each CC is 20MHz, and frequencies of the CCs may be next to each other closely or separated. A carrier accessed randomly by the UE is called a Primary Carrier Component (PCC) or a Primary Cell (PCell), the PCell and the UE maintain a Radio Resource Control (RRC) connection, the carrier except the PCC is called a Secondary Carrier Component (SCC) or a Secondary Cell (SCell). The PCC is always activated, and the SCC may be activated through the PCC or an activated SCC. Scenes of the CA can be divided into three types: intra-band continuous carrier aggregation, intra-band non-continuous carrier aggregation, and inter-band non-contiguous carrier aggregation.

A key technical point of the CA is determination of each carrier component; wherein, the PCC, namely the PCell, is a cell randomly accessed by the UE, and can be determined when the UE accesses the cell; and the PCell is identical to a cell in 3rd Generation Partnership Project-Release8 (3GPP R8) or 3rd Generation Partnership Project-Release9 (3GPP R9); and a management method thereof is also identical to a cell management method for non-carrier aggregation. However, determination of the SCell completely depends on selection of an Evolved Node B (eNB), and management of the SCell is also new content introduced by a CA function, and currently the management of the SCell has not been explicitly regulated by a protocol.

US 2011/281578 A1 discloses a method to minimize measurements during CA in a wireless communication station. In particular, the method includes configuring the mobile station for CA on at least a primary serving cell and a secondary serving cell, configuring the mobile station to perform measurements of cells operating on at least the primary carrier frequency and the secondary carrier frequency, refraining from triggering a measurement report when a neighbour cell operating on the primary carrier frequency is better than the primary serving cell only if a signal level of the primary serving cell is better than a first threshold, and triggering a measurement report when a neighbour cell operating on the secondary carrier frequency is better than the secondary serving cell only if the signal level of the primary serving cell is worse than a second threshold.

### SUMMARY

A technical problem to be solved by embodiments of the disclosure is to provide a method and a device for managing an SCell in CA, so as to solve a problem of managing the SCell in the CA and meet a bandwidth requirement of the CA.

The features of the method and device according to the present disclosure are defined in the independent claims, and the preferable features according to the present invention are defined in the dependent claims. The invention is solely defined by the appended claims. In the following, references to embodiments not falling within the scope of the claims are to be understood as examples useful for understanding the invention. By adopting the above technical schemes, the embodiments of the disclosure may at least have the following advantages:
the method and device for managing the SCell in the CA, which are provided by the embodiments of the disclosure, solve a problem of managing the SCell in the CA, flexibly use an existing adjacent cell configuration technique and measurement technique, so as to implement dynamic management of the SCell, and to provide a key technical support to implantation of a CA function.

### BRIEF DESCRIPTION OF THE DRAWINGS

Fig. 1 is a flowchart of a method for managing an SCell in CA of Embodiment 1 of the disclosure;
Fig. 2 is a flowchart of a method for managing an SCell in CA of Embodiment 2 of the disclosure;
Fig. 3 is a flowchart of a method for managing an SCell in CA of Embodiment 3 of the disclosure;
Fig. 4 is a structure diagram of a device for managing an SCell in CA of Embodiment 4 of the disclosure;
Fig. 5 is a structure diagram of a device for managing an SCell in CA of Embodiment 5 of the disclosure;
Fig. 6 is a structure diagram of a device for managing an SCell in CA of Embodiment 6 of the disclosure;
Fig. 7 is a specific flowchart of an Application Example 1 of the disclosure;
Fig. 8 is a specific flowchart of an Application Example 2 of the disclosure;
Fig. 9 is a specific flowchart of an Application Example 3 of the disclosure; and
Fig. 10 is a specific flowchart of an Application Example 4 of the disclosure.

### DETAILED DESCRIPTION

In order to further explain a technical means adopted by the disclosure to achieve a predetermined purpose and efficacy, an embodiment of the disclosure is illustrated in detail below in combination with the drawing and a preferred embodiment, as shown below.

Because CA of an LTE system is needed to be implemented by an embodiment of the disclosure, those skilled in the art shall know that a UE referred in the embodiment of the disclosure must support the CA, at least when the UE is accessed, a CA function at an eNB side must be started. In a 3rd Generation Partnership Project-Release10 (3GPP R10) protocol, an eNB supports the CA function.

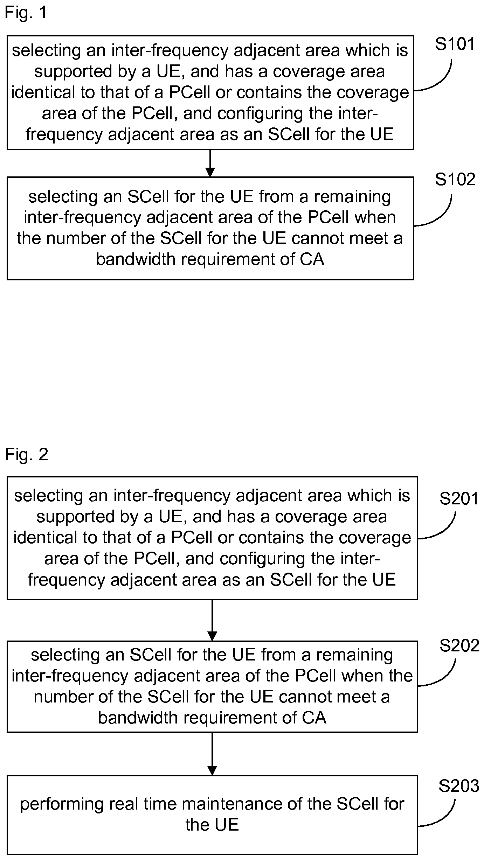

Embodiment 1 of the disclosure is shown in Fig. 1, a method for managing an SCell in CA is provided, wherein an eNB configures a PCell for a UE, and this method includes the following specific steps:
Step S101: selecting an inter-frequency adjacent area which is supported by the UE, and has a coverage area identical to that of the PCell or contains the coverage area of the PCell, and configuring the inter-frequency adjacent area as the SCell for the UE.

In the embodiment of the disclosure, a technique for configuring the PCell and an adjacent area belongs to the related art, so the technique is not described in detail here.

Step S102: selecting an SCell for the UE from a remaining inter-frequency adjacent area of the PCell when the number of the SCell for the UE cannot meet a bandwidth requirement of the CA.

Specifically, aiming at a frequency point of the remaining inter-frequency adjacent area of the PCell for the UE, a measurement event A4 in a 3GPP TS36.331 protocol is started, to configure the selected SCell for the UE. A specific procedure for configuring the selected SCell for the UE includes that: the UE measures whether an adjacent area exists in the remaining inter-frequency adjacent area of the PCell, of which a signal quality is higher than a threshold of the measurement event A4; if the adjacent area exists, then the adjacent area is reported to the eNB, and the eNB configures the adjacent area as the SCell for the UE.

Embodiment 2 of the disclosure is shown in Fig. 2, this embodiment is the generally identical to Embodiment 1, and a difference is that this embodiment further includes real time maintenance of the SCell for the UE.

A method for managing an SCell in CA, wherein an eNB configures a PCell for a UE, and this method includes the following specific steps:
Step S201: selecting an inter-frequency adjacent area which is supported by the UE, and has a coverage area identical to that of the PCell or contains the coverage area of the PCell, and configuring the inter-frequency adjacent area as the SCell for the UE.

In the embodiment of the disclosure, the technique for configuring the PCell and the adjacent area belongs to the related art, so the technique is not described in detail here.

Step S202: selecting an SCell for the UE from a remaining inter-frequency adjacent area of the PCell when the number of the SCell for the UE cannot meet a bandwidth requirement of the CA.

Specifically, aiming at a frequency point of the remaining inter-frequency adjacent area of the PCell for the UE, a measurement event A4 in a 3GPP TS36.331 protocol is started, to configure the selected SCell for the UE. A specific procedure for configuring the selected SCell for the UE includes that: the UE measures whether an adjacent area exists in the remaining inter-frequency adjacent area of the PCell, of which a signal quality is higher than a threshold of the measurement event A4; if yes, then the adjacent area is reported to the eNB, and the eNB configures the adjacent area as the SCell for the UE.

Step S203: performing real time maintenance of the SCell for the UE.

Specifically, aiming at a frequency point of an intra-frequency adjacent area of the SCell for the UE, a measurement event A6 in the 3GPP TS36.331 protocol is started, to update the SCell for the UE; and/or aiming at the frequency point of the SCell for the UE, a measurement event A2 in the 3GPP TS36.331 protocol is started, to delete an SCell unsuitable for serving the UE.

A specific procedure for updating the SCell for the UE includes that: the UE measures a signal quality of the intra-frequency adjacent area of the SCell, and reports the intra-frequency adjacent area of which the signal quality is higher than a threshold of the measurement event A6 to the eNB, and the eNB configures the intra-frequency adjacent area as a new SCell to substitute the corresponding original SCell and notifies the UE to update the original SCell.

A specific procedure for deleting the SCell unsuitable for serving the UE includes that: the UE measures a signal quality of the SCell, and reports the SCell of which the signal quality is lower than a threshold of the measurement event A2 to the eNB, and the eNB deletes the SCell and notifies the UE to delete the corresponding SCell.

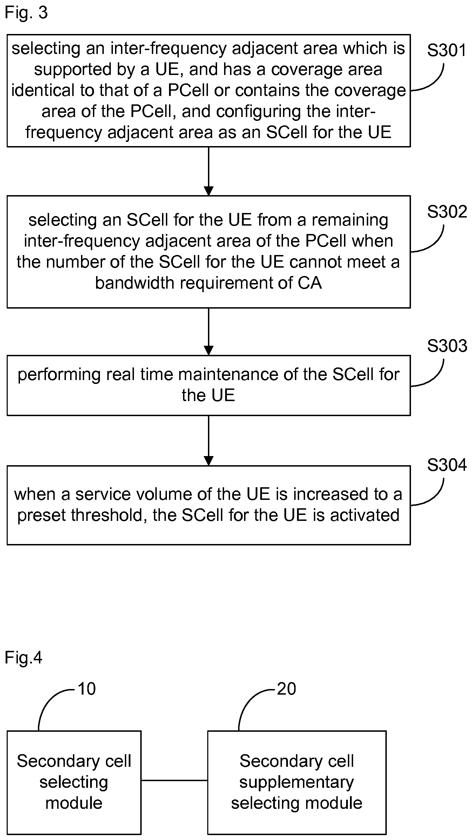

Embodiment 3 of the disclosure is shown in Fig. 3, and this embodiment is generally identical to Embodiment 2, a difference is that this embodiment further includes: when configuring each SCell for the UE, an initial state of the SCell for the UE is set as deactivation, and subsequently when a service volume of the UE is increased to a preset threshold, the SCell for the UE is activated, to make the SCell and the PCell to serve the UE together, without waiting.

A method for managing an SCell in CA, wherein an eNB configures a PCell for a UE, and this method includes the following specific steps:
Step S301: selecting an inter-frequency adjacent area which is supported by the UE and has a coverage area identical to that of the PCell or contains the coverage area of the PCell, configuring the inter-frequency adjacent area as the SCell for the UE, and setting an initial state of the SCell for the UE as deactivation.

In the embodiment of the disclosure, the technique for configuring the PCell and the adjacent area belongs to the related art, so the technique is not described in detail here.

Step S302: when the number of the SCell for the UE cannot meet a bandwidth requirement of the CA, selecting an SCell for the UE from a remaining inter-frequency adjacent area of the PCell again, and setting the initial state of the SCell for the UE as deactivation.

Specifically, aiming at the frequency point of the remaining inter-frequency adjacent area of the PCell for the UE, a measurement event A4 in a 3GPP TS36.331 protocol is started, the UE reports a measured remaining inter-frequency adjacent area of which a signal quality is higher than a threshold of the measurement event A4 to the eNB, and the eNB configures the remaining inter-frequency adjacent area as the SCell for the UE.

Step S303: performing real time maintenance of the SCell for the UE.

Specifically, aiming at a frequency point of an intra-frequency adjacent area of the SCell for the UE, a measurement event A6 in the 3GPP TS36.331 protocol is started, and the UE measures a signal quality of the intra-frequency adjacent area of the SCell, and reports the intra-frequency adjacent area of which the signal quality is higher than a threshold of the measurement event A6 to the eNB, and the eNB configures the intra-frequency adjacent area as a new SCell and substitutes the corresponding original SCell, to update the SCell for the UE;
and/or, aiming at a frequency point of the SCell for the UE, a measurement event A2 in the 3GPP TS36.331 protocol is started, and the UE measures a signal quality of the SCell, and reports the SCell of which the signal quality is lower than a threshold of the measurement event A2 to the eNB, and the eNB deletes the SCell and notifies the UE to delete the corresponding SCell, so as to delete the SCell unsuitable for serving the UE.

Step S304, when a service volume of the UE is increased to a preset threshold, the SCell for the UE is activated to make the SCell and the PCell to serve the UE together.

Embodiment 4 of the disclosure is shown in Fig. 4, a device for managing an SCell in CA is provided, wherein a PCell is configured for a UE by an eNB, and this device includes that:
1) A secondary cell selecting module 10, configured to select an inter-frequency adjacent area which is supported by the UE and has a coverage area identical to that of the PCell or contains the coverage area of the PCell, and to configure the inter-frequency adjacent area as the SCell for the UE.
   In the embodiment of the disclosure, the technique for configuring the PCell and the adjacent area belongs to the related art, so the technique is not described in detail here.
2) A secondary cell supplementary selecting module 20, configured to select an SCell for the UE from a remaining inter-frequency adjacent area of the PCell, when the number of the SCell for the UE cannot meet a bandwidth requirement of the CA.

Specifically, the secondary cell supplementary selecting module 20 aims at a frequency point of the remaining inter-frequency adjacent area of the PCell for the UE, starts a measurement event A4 in a 3GPP TS36.331 protocol, and sends the measurement event A4 to the UE; the UE measures whether an adjacent area of which a signal quality is higher than a threshold of the measurement event A4 is in the remaining inter-frequency adjacent area of the PCell; if the adjacent area exists, then the adjacent area is reported to the eNB, specifically the secondary cell supplementary selecting module 20, and the secondary cell supplementary selecting module 20 configures the adjacent area as the SCell for the UE.

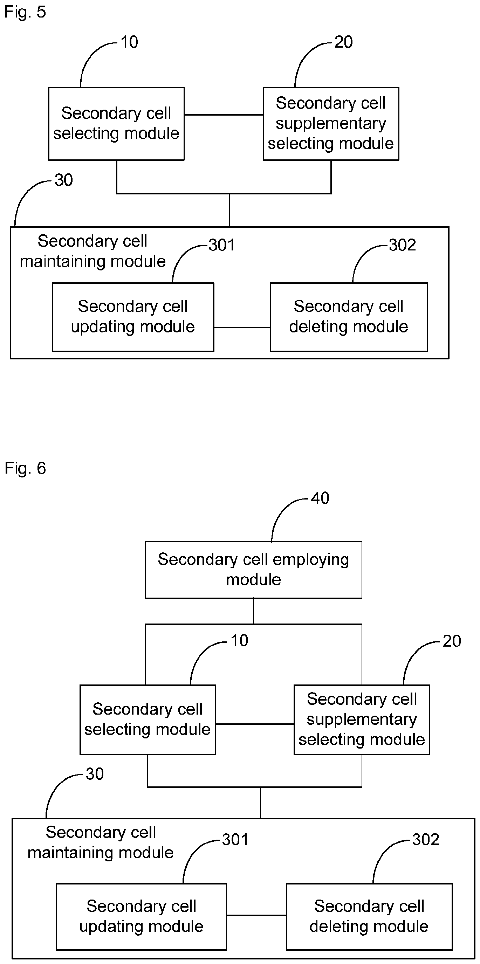

Embodiment 5 of the disclosure is shown in Fig. 5, and this embodiment is generally identical to Embodiment 4 and a difference is that the device of this embodiment further includes a secondary cell maintenance module 30, configured to perform real time maintenance of the SCell for the UE.

A device for managing an SCell in CA, wherein a PCell is configured for a UE by an eNB and this device includes that:
1) A secondary cell selecting module 10, configured to select an inter-frequency adjacent area which is supported by the UE and has a coverage area identical to that of the PCell or contains the coverage area of the PCell, and to configure the inter-frequency adjacent area as the SCell for the UE.
   In the embodiment of the disclosure, the technique for configuring the PCell and the adjacent area belongs to the related art, so the technique is not described in detail here.
2) A secondary cell supplementary selecting module 20, configured to select an SCell for the UE from a remaining inter-frequency adjacent area of the PCell, when the number of the SCell for the UE cannot meet a bandwidth requirement of the CA.
   Specifically, the secondary cell supplementary selecting module 20 aims at a frequency point of the remaining inter-frequency adjacent area of the PCell for the UE, starts a measurement event A4 in a 3GPP TS36.331 protocol, and sends the measurement event A4 to the UE; the UE measures whether an adjacent area exists in the remaining inter-frequency adjacent area of the PCell, of which a signal quality is higher than a threshold of the measurement event A4; if the adjacent area exists, then the adjacent area is reported to the eNB, specifically the secondary cell supplementary selecting module 20, and the secondary cell supplementary selecting module 20 configures the adjacent area as the SCell for the UE.
3) A secondary cell maintaining module 30, configured to perform real time maintenance of the SCell for the UE. The secondary cell maintaining module 30 includes:
   a secondary cell updating module 301, configured to start a measurement event A6 in the 3GPP TS36.331 protocol, aiming at a frequency point of the intra-frequency adjacent area of the SCell for the UE, to update the SCell for the UE; and/or
   a secondary cell deleting module 302, configured to start a measurement event A2 in the 3GPP TS36.331 protocol, aiming at a frequency point of the SCell for the UE, to delete an SCell unsuitable for serving the UE.

Preferably, a specific procedure for updating the SCell for the UE by the secondary cell updating module 301 includes: the secondary cell updating module 301 sends the measurement event A6 to the UE; the UE measures a signal quality of the intra-frequency adjacent area of the SCell, and reports the intra-frequency adjacent area of which the signal quality is higher than a threshold of the measurement event A6 to the eNB, specifically the secondary cell updating module 301; the secondary cell updating module 301 configures the intra-frequency adjacent area as a new SCell, substitutes the corresponding original SCell, and notifies the UE to update the original SCell.

A specific procedure for deleting the SCell unsuitable for serving the UE by the secondary cell deleting module 302 is: the secondary cell deleting module 302 sends the measurement event A2 to the UE; the UE measures a signal quality of the SCell, and reports the SCell of which the signal quality is lower than a threshold of the measurement event A2 to the eNB, specifically the secondary cell deleting module 302; the secondary cell deleting module 302 deletes the SCell, and notifies the UE to delete the corresponding SCell.

Embodiment 6 of the disclosure is shown in Fig. 6, and this embodiment is generally identical to Embodiment 5 and a difference is that the device of this embodiment further includes a secondary cell employing module 40.

A device for managing an SCell in CA, wherein a PCell is configured for a UE by an eNB and this device includes that:
1) A secondary cell selecting module 10, configured to select an inter-frequency adjacent area which is supported by the UE and has a coverage area identical to that of the PCell or contains the coverage area of the PCell, and to configure the inter-frequency adjacent area as the SCell for the UE.
   In the embodiment of the disclosure, the technique for configuring the PCell and the adjacent area belongs to the related art, so the technique is not described in detail here.
2) A secondary cell supplementary selecting module 20, configured to select an SCell for the UE from a remaining inter-frequency adjacent area of the PCell, when the number of the SCell for the UE cannot meet a bandwidth requirement of the CA.
   Specifically, the secondary cell supplementary selecting module 20 starts a measurement event A4 in a 3GPP TS36.331 protocol, aiming at a frequency point of the remaining inter-frequency adjacent area of the PCell for the UE, to select the SCell for the UE for configuration.
3) A secondary cell maintaining module 30, configured to perform real time maintenance of the SCell for the UE. The secondary cell maintaining module 30 includes:
   a secondary cell updating module 301, configured to start a measurement event A6 in the 3GPP TS36.331 protocol, aiming at a frequency point of the intra-frequency adjacent area of the SCell for the UE, to update the SCell for the UE; and/or
   a secondary cell deleting module 302, configured to start a measurement event A2 in the 3GPP TS36.331 protocol, aiming at a frequency point of the SCell for the UE, to delete an SCell unsuitable for serving the UE.
4) A secondary cell employing module 40, configured to set an initial state of the SCell for the UE as deactivation, and activate the SCell for the UE when a service volume of the UE is increased to a preset threshold.

In the above embodiment of the disclosure, the secondary cell selecting module 10, the secondary cell supplementary selecting module 20, the secondary cell maintaining module 30, the secondary cell updating module 301, the secondary cell deleting module 302, and the secondary cell employing module 40 can all be implemented by a Central Processing Unit (CPU), or a Digital Signal Processor (DSP), or a Field Programmable Gate Array (FPGA), and etc. The CPU, the DSP, and the FPGA are all located at an eNB side.

Based on the technical schemes in Embodiments 1 to 6, four application examples of the technical schemes of the disclosure are introduced.

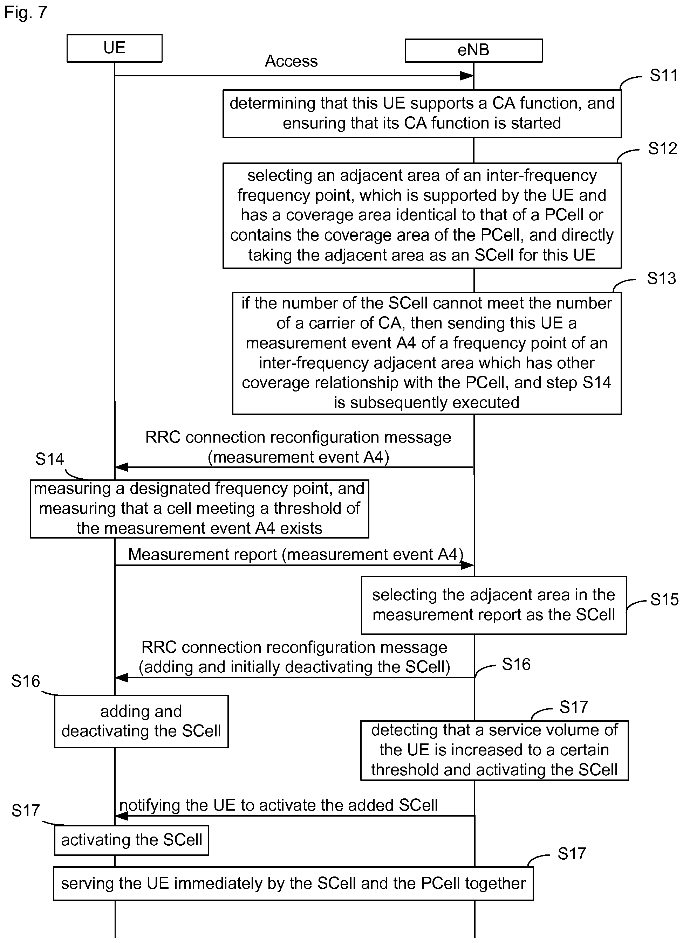

Application Example 1: as shown in Fig. 7, a CA function is started, an SCell is configured for a UE, and a specific process includes the following steps:
step S11: when the UE is accessed, an eNB determines that the UE supports CA, and simultaneously the eNB ensures that its CA function is started.
step S12: the eNB selects an SCell for the UE: an adjacent area of an inter-frequency frequency point, which is supported by the UE and has a coverage area identical to that of a PCell or contains the coverage area of the PCell, is directly selected as the SCell for this UE.
step S13: the eNB determines whether the number of the SCell selected in step S12 meets a bandwidth requirement of the CA; if the bandwidth requirement is not met, then the eNB sends the UE a measurement event A4 of a frequency point of an inter-frequency adjacent area which has other coverage relationship with the PCell, and step S14 is subsequently executed; otherwise, step S16 is directly executed.
step S14: the UE receives configuration of the measurement event A4 from the eNB, begins to measure a designated frequency point, and when a cell meeting a threshold of the measurement event A4 is measured, the UE reports this cell to the eNB through an A4-measurement report.
step S15: the eNB selects the adjacent area in the measurement report reported from the UE as the SCell for this UE.
step S16: the eNB sends a list of the selected SCell to the UE through an RRC connection reconfiguration message, and sets an initial state of the selected SCell as deactivation.
step S17: when the eNB detects that a service volume of the UE is increased to a preset threshold, the eNB notifies the UE to activate the SCell, so as to make the SCell and the PCell to serve the UE together.

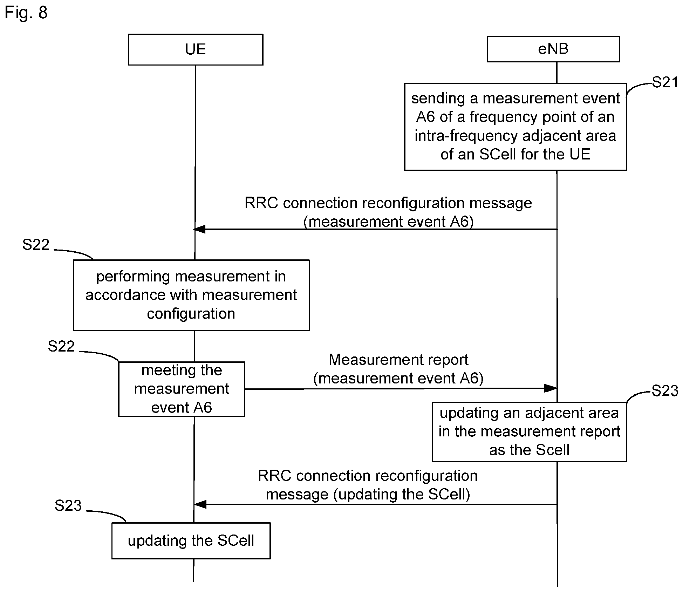

Application Example 2: as shown in Fig. 8, an SCell is updated for a UE, and a specific process includes the following steps:
step S21: an eNB sends a measurement event A6 of a frequency point of an intra-frequency adjacent area of the SCell to the UE while configuring the SCell for the UE.
step S22: the UE measures a signal quality of the intra-frequency adjacent area of the SCell, when a cell of which the signal quality is higher than a threshold of the measurement event A6 is measured, the UE reports this cell to the eNB through an A6-measurement report.
step S23: the eNB receives the A6-measurement report from the UE, takes the cell included in the A6-measurement report as a new SCell for this UE so as to substitute a corresponding original SCell, and notifies the UE to update the SCell through an RRC connection reconfiguration message.

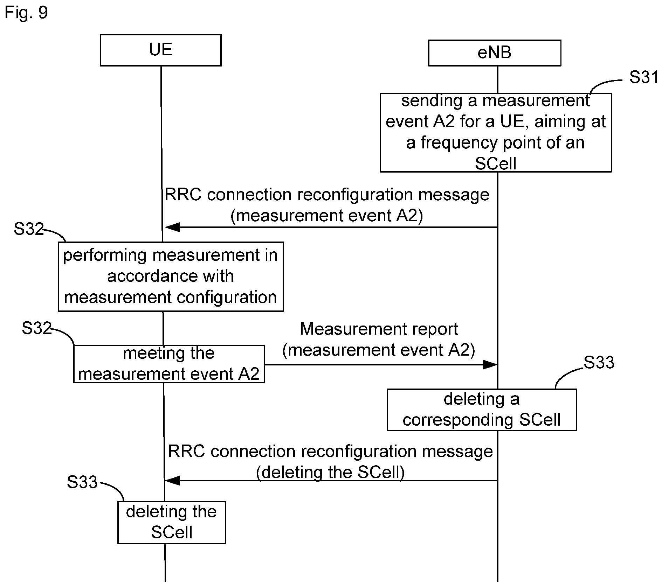

Application Example 3: as shown in Fig. 9, an SCell is deleted for a UE, and a specific process includes the following steps:
step S31: when an eNB configures an SCell for a UE, a measurement event A2 of a frequency point of the SCell is simultaneously configured for the UE.
step S32: the UE measures a signal quality of the SCell, when the UE measures that the signal quality is lower than a threshold of the measurement event A2, the UE reports an A2-measurement report of this SCell to the eNB.
step S33: the eNB receives the A2-measurement report from the UE, deletes a corresponding SCell, and notifies the UE to delete the corresponding SCell through an RRC connection reconfiguration message.

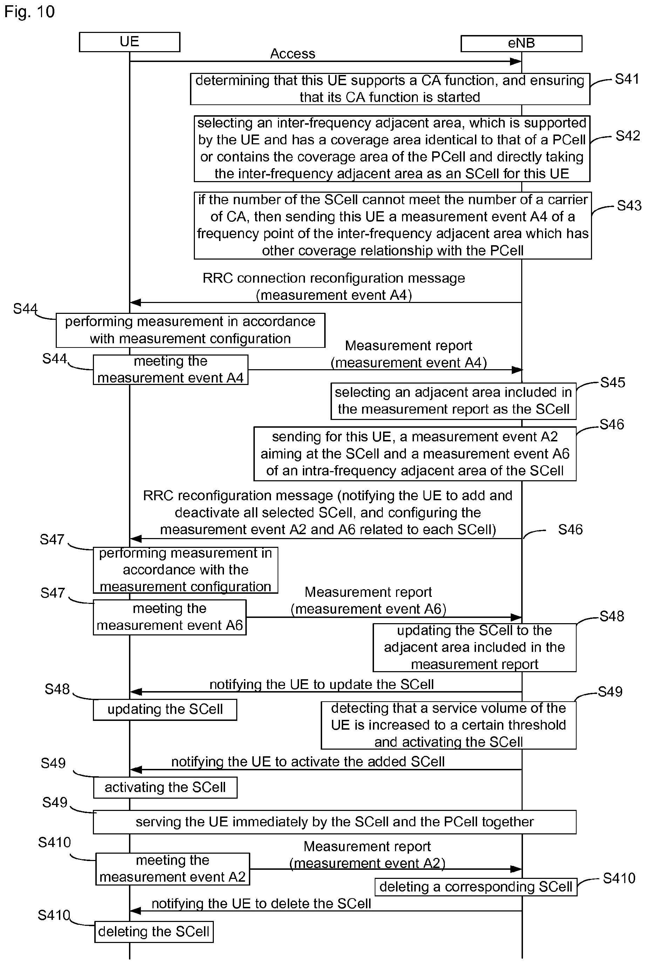

Application Example 4: as shown in Fig. 10, a CA function is started, and an SCell is selected and configured for a UE, and real time maintenance is performed on the SCell for the UE; a specific process includes the following steps:
step S41: when the UE is accessed, an eNB determines that the UE supports CA, and simultaneously the eNB ensures that its CA function is started.
step S42: the eNB selects an SCell for the UE: an adjacent area of an inter-frequency frequency point, which is supported by the UE and has a coverage area identical to that of a PCell or contains the coverage area of the PCell, is selected to be directly taken as the SCell for this UE.
step S43: the eNB determines whether the number of the SCell selected in step S42 meets a bandwidth requirement of the CA; if the bandwidth requirement is not met, then the eNB sends this UE a measurement event A4 of a frequency point of an inter-frequency adjacent area which has other coverage relationship with the PCell, and step S44 is executed subsequently; otherwise, step S46 is executed directly.
step S44: the UE receives configuration of the measurement event A4 from the eNB, begins to measure a designated frequency point, when a cell meeting a threshold of the measurement event A4 is measured, the UE reports this cell to the eNB through an A4-measurement report.
step S45: the eNB selects the adjacent area in the measurement report reported from the UE as the SCell for this UE.
step S46: the eNB sends a list of the selected SCell to the UE through an RRC connection reconfiguration message, and sets an initial state of the selected SCell as deactivation; simultaneously the eNB configures a measurement event A2 of a frequency point of the SCell and a measurement event A6 of the frequency point of an intra-frequency adjacent area of the SCell for the UE.
step S47: the UE performs measurement in accordance with measurement configuration, when the SCell of which signal quality is higher than a threshold of the measurement event A6 is measured, the UE reports an A6 measurement report of this SCell.
step S48: when the UE reports the A6-measurement report of a certain SCell, the eNB takes the cell included in the A6-measurement report as a new SCell for this UE so as to substitute a corresponding original SCell, and notifies the UE to update the SCell through the RRC connection reconfiguration message.
step S49: when the eNB detects that the service volume of the UE is increased to a preset threshold, the eNB notifies the UE to activate the SCell, so as to make the SCell and the PCell to immediately serve the UE.
step S410: when the UE reports an A2-measurement report of a certain cell, the eNB notifies the UE to delete this SCell.

The method and the device for managing the SCell in the CA which are described in the embodiments of the disclosure solve a problem of managing the SCell in the CA, and flexibly use an existing adjacent area configuration technique and measurement technique to implement configuration and real time maintenance of the SCell, providing a key technical support to implementation of the CA function.

In addition, the embodiments of the disclosure may primarily configure the SCell for the UE and initially deactivate the SCell, when the service volume of the UE is increased, the configured SCell is directly activated, so as to make the SCell and the PCell to immediately serve the UE together without waiting, and time for the CA is saved.

A technical means adopted by the disclosure for achieving a predetermined purpose and efficacy may be further deeply understood specifically by illustrating the specific embodiment. However the accompanied drawings are only provided for reference and illustration, and are not used to limit the disclosure.
step S45: the eNB selects the adjacent area in the measurement report reported from the UE as the SCell for this UE.
step S46: the eNB sends a list of the selected SCell to the UE through an RRC connection reconfiguration message, and sets an initial state of the selected SCell as deactivation; simultaneously the eNB configures a measurement event A2 of a frequency point of the SCell and a measurement event A6 of the frequency point of an intra-frequency adjacent area of the SCell for the UE.
step S47: the UE performs measurement in accordance with measurement configuration, when the SCell of which signal quality is higher than a threshold of the measurement event A6 is measured, the UE reports an A6 measurement report of this SCell.
step S48: when the UE reports the A6-measurement report of a certain SCell, the eNB takes the cell included in the A6-measurement report as a new SCell for this UE so as to substitute a corresponding original SCell, and notifies the UE to update the SCell through the RRC connection reconfiguration message.
step S49: when the eNB detects that the service volume of the UE is increased to a preset threshold, the eNB notifies the UE to activate the SCell, so as to make the SCell and the PCell to immediately serve the UE.
step S410: when the UE reports an A2-measurement report of a certain cell, the eNB notifies the UE to delete this SCell.

The method and the device for managing the SCell in the CA which are described in the embodiments of the disclosure solve a problem of managing the SCell in the CA, and flexibly use an existing adjacent area configuration technique and measurement technique to implement configuration and real time maintenance of the SCell, providing a key technical support to implementation of the CA function.

In addition, the embodiments of the disclosure may primarily configure the SCell for the UE and initially deactivate the SCell, when the service volume of the UE is increased, the configured SCell is directly activated, so as to make the SCell and the PCell to immediately serve the UE together without waiting, and time for the CA is saved.

A technical means adopted by the disclosure for achieving a predetermined purpose and efficacy may be further deeply understood specifically by illustrating the specific embodiment. However the accompanied drawings are only provided for reference and illustration, and are not used to limit the disclosure.

## Claims

1. A method for managing a Secondary Cell, SCell, in Carrier Aggregation, CA, comprising: configuring, by an evolved Node B, eNB, a Primary Cell, PCell, for a User Equipment, UE, further comprising:
selecting an inter-frequency adjacent area which is supported by the UE and which has a coverage area which contains the coverage area of the PCell, and configuring the inter-frequency adjacent area as an SCell for the UE (S101);
selecting an SCell for the UE from a remaining inter-frequency adjacent area of the PCell when a number of the SCell for the UE configured according to the inter-frequency adjacent area cannot meet a bandwidth requirement of the CA (S102) wherein the step of selecting an SCell for the UE from a remaining inter-frequency adjacent area of the PCell comprises:
reporting, to the eNB by the UE, a measured adjacent cell in the remaining inter-frequency adjacent area of the PCell for the UE, of which a signal quality is higher than a threshold of a measurement event A4 in a 3rd Generation Partnership Project, 3GPP, TS36.331 protocol, and
configuring, by the eNB, the measured adjacent area as the SCell for the UE; and
setting an initial state of both the SCell for the UE configured according to the inter-frequency adjacent area and the SCell for the UE configured according to the measured adjacent area as deactivation, and activating both the SCell for the UE configured according to the inter-frequency adjacent area and the SCell for the UE configured according to the measured adjacent area when detecting that a service volume of the UE is increased to a pre-set threshold.

2. The method according to claim 1, further comprising: performing real time maintenance of the SCell for the UE.

3. The method according to claim 2, wherein the performing real time maintenance of the SCell for the UE comprises:
reporting, to the eNB by the UE, a measured intra-frequency adjacent area of which a signal quality is higher than a threshold of a measurement event A6 in a 3GPP TS36.331 protocol, and configuring and updating, by the eNB, the intra-frequency adjacent area as the SCell for the UE;
and/or
reporting, to the eNB by the UE, a measured SCell for the UE of which a signal quality is lower than a threshold of a measurement event A2 in the 3GPP TS36.331 protocol, and deleting, by the eNB, the SCell.

4. A device adapted to manage a Secondary Cell, SCell, in Carrier Aggregation, CA, wherein a Primary Cell, PCell, is configured for a User Equipment, UE, by an evolved Node B, eNB, comprising:
a secondary cell selecting module (10), configured to select an inter-frequency adjacent area which is supported by the UE and which has a coverage area which contains the coverage area of the PCell, and to configure the inter-frequency adjacent area as an SCell for the UE;
a secondary cell supplementary selecting module (20), configured to select an SCell for the UE from a remaining inter-frequency adjacent area of the PCell when a number of the SCell for the UE configured by the secondary cell selecting module (10) cannot meet a bandwidth requirement of the CA, wherein the secondary cell supplementary selecting module (20) is configured to configure, an adjacent cell measured by the UE in the remaining inter-frequency adjacent area of the PCell, of which a signal quality is higher than a threshold of a measurement event A4 in a 3rd Generation Partnership Project, 3GPP, TS36.331 protocol, as the SCell for the UE; and
a secondary cell employing module (40), configured to set an initial state of both the SCell for the UE configured by the secondary cell selecting module (10) and the SCell for the UE configured by the secondary cell supplementary selecting module (20) as deactivation, and to activate both the SCell for the UE configured by the secondary cell selecting module (10) and the SCell for the UE configured by the secondary cell supplementary selecting module (20) when detecting that a service volume of the UE is increased to a pre-set threshold.

5. The device according to claim 4, further comprising:
a secondary cell maintaining module (30), configured to perform real time maintenance of the SCell for the UE.

6. The device according to claim 5, wherein the secondary cell maintaining module (30) comprises:
a secondary cell updating module (301), configured to update an intra-frequency adjacent cell measured by the UE of which a signal quality is higher than a threshold of a measurement event A6 in a 3GPP TS36.331 protocol, as the SCell for the UE; and/or
a secondary cell deleting module (302), configured to delete the SCell measured by the UE of which a signal quality is lower than a threshold of a measurement event A2 in the 3GPP TS36.331 protocol.

## Patentansprüche

1. Verfahren zur Verwaltung einer Sekundärzelle, SCell, in einer Trägeraggregation, CA, umfassend: Konfigurieren, durch einen weiterentwickelten Knoten B, eNB, einer Primärzelle, PCell, für eine Benutzereinrichtung, UE, weiterhin umfassend:
Auswählen eines benachbarten Interfrequenzbereichs, der von dem UE unterstützt wird und der einen Abdeckungsbereich aufweist, der den Abdeckungsbereich der PCell enthält, und Konfigurieren des benachbarten Interfrequenzbereichs als SCell für das UE (S101);
Auswählen einer SCell für das UE aus einem verbleibenden benachbarten Interfrequenzbereich der PCell, wenn eine Anzahl der SCell für das UE, die gemäß dem benachbarten Interfrequenzbereich konfiguriert ist, eine Bandbreitenanforderung der CA (S102) nicht erfüllen kann, wobei der Schritt des Auswählens einer SCell für das UE aus einem verbleibenden benachbarten Interfrequenzbereich der PCell Folgendes umfasst:
Melden einer gemessenen benachbarten Zelle in dem verbleibenden benachbarten Interfrequenzbereich der PCell für das UE an den eNB durch das UE, dessen Signalqualität höher ist als ein Schwellenwert eines Messereignisses A4 in einem Partnerschaftsprojekt der 3. Generation, 3GPP, TS36.331-Protokoll und
Konfigurieren des gemessenen benachbarten Bereichs durch den eNB als SCell für das UE; und
Setzen eines Anfangszustands sowohl der SCell für das gemäß dem benachbarten Interfrequenzbereich konfigurierte UE als auch der SCell für das gemäß dem gemessenen benachbarten Bereich konfigurierte UE als Deaktivierung und Aktivieren sowohl der SCell für das UE, das gemäß dem benachbarten Interfrequenzbereich konfiguriert ist, als auch der SCell für das UE, das gemäß dem gemessenen benachbarten Bereich konfiguriert ist, wenn erkannt wird, dass ein Dienstvolumen des UE auf einen voreingestellten Schwellenwert erhöht wird.

2. Verfahren nach Anspruch 1, weiter umfassend: Durchführen einer Echtzeit-Wartung der SCell für das UE.

3. Verfahren nach Anspruch 2, wobei das Durchführen einer Echtzeitwartung der SCell für das UE Folgendes umfasst:
Berichten eines gemessenen benachbarten Intrafrequenzbereichs, von dem eine Signalqualität höher als ein Schwellenwert eines Messereignisses A6 in einem 3GPP TS36.331-Protokoll ist, an den eNB durch das UE, und Konfigurieren und Aktualisieren des benachbarten Intrafrequenzbereichs als die SCell für das UE durch den eNB;
und/oder
Melden einer gemessenen SCell für das UE, deren Signalqualität niedriger als ein Schwellenwert eines Messereignisses A2 in dem 3GPP TS36.331-Protokoll ist, an den eNB durch das UE, und Löschen der SCell durch den eNB.

4. Vorrichtung zur Verwaltung einer Sekundärzelle, SCell, in einer Trägeraggregation, CA, wobei eine primäre Zelle, PCell, für ein Benutzergerät, UE, durch einen weiterentwickelten Knoten B, eNB, konfiguriert ist, umfassend:
ein Auswahlmodul (10) der Sekundärzelle, konfiguriert zum Auswählen eines benachbarten Interfrequenzbereichs, der von dem UE unterstützt wird und der ein Abdeckungsgebiet aufweist, das das Abdeckungsgebiet der PCell enthält, und zum Konfigurieren des benachbarten Interfrequenzbereichs als eine SCell für das UE;
ein Zusatzauswahlmodul (20) der Sekundärzelle, konfiguriert zum Auswählen einer SCell für das UE aus einem verbleibenden benachbarten Interfrequenzbereich der PCell wenn eine Anzahl der von dem Auswahlmodul (10) der Sekundärzelle konfigurierten SCell für das UE eine Bandbreitenanforderung der CA nicht erfüllen kann, wobei das Zusatzauswahlmodul (20) der Sekundärzelle konfiguriert ist, um eine benachbarte Zelle, die durch das UE in dem verbleibenden benachbarten Interfrequenzbereich der PCell gemessen wird, deren Signalqualität höher ist als ein Schwellenwert eines Messereignisses A4 in einem Partnerschaftsprojekt der 3. Generation, 3GPP, TS36.331-Protokoll, als die SCell für das UE zu konfigurieren; und
ein Einsatzmodul (40) der Sekundärzelle, das konfiguriert ist, um einen Anfangszustand sowohl der SCell für das durch das Auswahlmodul (10) der Sekundärzelle konfigurierte UE als auch der SCell für das durch das Zusatzauswahlmodul (20) der Sekundärzelle konfigurierte UE, als Deaktivierung einzustellen, und um sowohl die SCell für das UE zu aktivieren, die durch das Auswahlmodul (10) der Sekundärzelle konfiguriert ist, als auch die SCell für das UE zu aktivieren, die durch das Zusatzauswahlmodul (20) der Sekundärzelle konfiguriert ist, wenn erkannt wird, dass ein Dienstvolumen des UE auf einen voreingestellten Schwellenwert erhöht ist.

5. Vorrichtung nach Anspruch 4, weiter umfassend: ein Wartungsmodul (30) der Sekundärzelle, das konfiguriert ist, um eine Echtzeitwartung der SCell für das UE durchzuführen.

6. Vorrichtung nach Anspruch 5, wobei das Wartungsmodul (30) der Sekundärzelle Folgendes umfasst:
ein Aktualisierungsmodul (301) der Sekundärzelle, das konfiguriert ist, um eine von dem UE gemessene benachbarte Intrafrequenzzelle zu aktualisieren, deren Signalqualität höher als ein Schwellenwert eines Messereignisses A6 in einem 3GPP TS36.331-Protokoll ist, als die SCell für das UE; und/oder
ein Löschmodul (302) der Sekundärzelle, das zum Löschen der von dem UE gemessenen SCell konfiguriert ist, deren Signalqualität niedriger als ein Schwellenwert eines Messereignisses A2 in dem Protokoll 3GPP TS36.331 ist.

## Revendications

1. Procédé pour gérer une cellule secondaire, SCell, dans l'agrégation de porteuses, CA, comprenant : la configuration, par un noeud évolué B, eNB, d'une cellule primaire, PCell, pour un équipement utilisateur, UE, comprenant en outre :
la sélection d'une zone adjacente inter-fréquence qui est supportée par l'UE et qui possède une zone de couverture qui contient la zone de couverture de la PCell, et la configuration de la zone adjacente inter-fréquence en tant que SCell pour l'UE (S101) ;
la sélection d'une SCell pour l'UE à partir d'une zone adjacente inter-fréquence restante de la PCell lorsqu'un nombre de la SCell pour l'UE configurée selon la zone adjacente inter-fréquence ne peut pas satisfaire à une exigence de largeur de bande de la CA (S102) dans lequel l'étape de la sélection d'une SCell pour l'UE à partir d'une zone adjacente inter-fréquence restante de la PCell comprend :
le rapport, à la eNB, par l'UE, d'une cellule adjacente mesurée dans la zone adjacente inter-fréquence restante de la PCell pour l'UE, dont une qualité de signal est supérieure à un seuil d'un événement de mesure A4 dans un protocole TS36.331 de projet de partenariat de 3ème génération, 3GPP, et
la configuration, par la eNB, de la zone adjacente mesurée en tant que SCell pour l'UE ; et
le réglage d'un état initial à la fois de la SCell pour l'UE configurée selon la zone adjacente inter-fréquence et de la SCell pour l'UE configurée selon la zone adjacente mesurée en tant que désactivation, et l'activation à la fois de la SCell pour l'UE configurée selon la zone adjacente inter-fréquence et de la SCell pour l'UE configurée selon la zone adjacente mesurée lors de la détection qu'un volume de service de l'UE est augmenté jusqu'à un seuil préréglé.

2. Procédé selon la revendication 1, comprenant en outre : la réalisation de maintenance en temps réel de la SCell pour l'UE.

3. Procédé selon la revendication 2, dans lequel la réalisation de maintenance en temps réel de la SCell pour l'UE comprend :
le rapport, à la eNB, par l'UE, d'une zone adjacente intra-fréquence mesurée dont une qualité de signal est supérieure à un seuil d'un événement de mesure A6 dans un protocole TS36.331 de 3GPP, et la configuration et la mise à jour, par la eNB, de la zone adjacente intra-fréquence en tant que SCell pour l'UE ; et/ou
le rapport, à la eNB, par l'UE, d'une SCell mesurée pour l'UE dont une qualité de signal est inférieure à un seuil d'un événement de mesure A2 dans le protocole TS36.331 de 3GPP, et la suppression, par la eNB, de la SCell.

4. Dispositif adapté pour gérer une cellule secondaire, SCell, dans l'agrégation de porteuses, CA, dans lequel une cellule primaire, PCell, est configurée pour un équipement utilisateur, UE, par un noeud évolué B, eNB, comprenant :
un module de sélection de cellule secondaire (10), configuré pour sélectionner une zone adjacente inter-fréquence qui est supportée par l'UE et qui possède une zone de couverture qui contient la zone de couverture de la PCell, et pour configurer la zone adjacente inter-fréquence en tant que SCell pour l'UE ;
un module de sélection supplémentaire de cellule secondaire (20), configuré pour sélectionner une SCell pour l'UE à partir d'une zone adjacente inter-fréquence restante de la PCell lorsqu'un nombre de la SCell pour l'UE configurée par le module de sélection de cellule secondaire (10) ne peut pas satisfaire à une exigence de largeur de bande de la CA, dans lequel le module de sélection supplémentaire de cellule secondaire (20) est configuré pour configurer une cellule adjacente mesurée par l'UE dans la zone adjacente inter-fréquence restante de la PCell, dont une qualité de signal est supérieure à un seuil d'un événement de mesure A4 dans un protocole TS36.331 de projet de partenariat de 3ème génération, 3GPP, as la SCell pour l'UE ; et
un module d'emploi de cellule secondaire (40), configuré pour régler un état initial à la fois de la SCell pour l'UE configurée par le module de sélection de cellule secondaire (10) et de la SCell pour l'UE configurée par le module de sélection supplémentaire de cellule secondaire (20) en tant que désactivation, et pour activer à la fois la SCell pour l'UE configurée par le module de sélection de cellule secondaire (10) et la SCell pour l'UE configurée par le module de sélection supplémentaire de cellule secondaire (20) lors de la détection qu'un volume de service de l'UE est augmenté jusqu'à a seuil préréglé.

5. Dispositif selon la revendication 4, comprenant en outre :
un module de maintenance de cellule secondaire (30), configuré pour réaliser la maintenance en temps réel de la SCell pour l'UE.

6. Dispositif selon la revendication 5, dans lequel le module de maintenance de cellule secondaire (30) comprend :
un module de mise à jour de cellule secondaire (301), configuré pour mettre à jour une cellule adjacente intra-fréquence mesurée par l'UE dont une qualité de signal est supérieure à un seuil d'un événement de mesure A6 dans un protocole TS36.331 de 3GPP, en tant que SCell pour l'UE ; et/ou
un module de suppression de cellule secondaire (302), configuré pour supprimer la SCell mesurée par l'UE dont une qualité de signal est inférieure à un seuil d'un événement de mesure A2 dans le protocole TS36.331 de 3GPP.
